# FASCICULE DE BREVET EUROPEEN

(11) **EP 3 097 342 B1**
(45) Date de publication et mention de la délivrance du brevet: **25.04.2018**
(21) Numéro de dépôt: 14827797.3
(22) Date de dépôt: 02.12.2014
(51) Int. Cl.: F17C 13/02

(54) **ROBINET POUR BOUTEILLE DE FLUIDE SOUS PRESSION ET BOUTEILLE CORRESPONDANTE**
VENTIL FÜR EINEN UNTER DRUCK STEHENDEN FLUIDZYLINDER UND ENTSPRECHENDES ZYLINDER
VALVE FOR A PRESSURIZED FLUID CYLINDER AND CORRESPONDING CYLINDER

(30) Priorité: 22.01.2014 FR 1450527
(43) Date de publication de la demande: 30.11.2016
(73) Titulaire: L'Air Liquide Société Anonyme pour l'Etude et l'Exploitation des Procédés Georges Claude, 75007 Paris (FR)
(72) Inventeur: CARRON, Amélie, 94340 Joinville le Pont (FR); LOPEZ, Beatriz, F-75016 Paris (FR); REZEL, Christophe Roland, F-91600 Savigny sur Orge (FR); RUDNIANYN, Philippe, F-91700 Villiers Sur Orge (FR); VIVIER, Catherine, F-38120 Saint-Egreve (FR)
(74) Mandataire: De Cuenca, Emmanuel Jaime
(86) Numéro de dépôt international: PCT/FR2014/053124
(87) Numéro de publication internationale: WO 2015/110719

(56) Documents cités:
- EP-A2- 2 339 222
- WO-A2-2012/164240
- GB-A- 2 486 018
- US-A1- 2004 045 608
- US-A1- 2005 103 342
- US-A1- 2008 150 739
- US-A1- 2009 050 218
- US-A1- 2010 245 098

## Description

La présente invention concerne un robinet pour bouteille de fluide sous pression ainsi qu'une bouteille correspondante.

L'invention concerne plus particulièrement un robinet pour bouteille de fluide sous pression comprenant un corps muni d'une extrémité destinée à être montée dans l'orifice d'une bouteille de fluide sous pression, le corps du robinet abritant un premier circuit de soutirage comprenant une première extrémité amont destinée à communiquer avec le volume de stockage d'une bouteille de fluide sous pression et une seconde extrémité aval destinée à être raccordée à un organe utilisateur du gaz soutiré, le premier circuit de soutirage comprenant un organe de régulation du débit et/ou de la pression du fluide soutiré entre les extrémités amont et aval, le robinet comprenant un organe de commande manuelle de l'organe de régulation, l'organe de commande étant monté mobile relativement au corps du robinet et coopérant avec l'organe de régulation pour contrôler le débit et/ou la pression de fluide admis à circuler de l'extrémité amont vers l'extrémité aval selon la position de l'organe de commande par rapport au corps, le robinet comprenant un dispositif électronique d'indication de donnée(s) relative(s) au contenu de fluide dans une bouteille raccordée au robinet, le dispositif électronique d'indication comprenant un organe d'acquisition de stockage et de traitement de données et au moins un afficheur de données relié à l'organe d'acquisition de stockage et de traitement de données, le robinet comprenant un capteur de position de l'organe de commande manuelle de l'organe de régulation, le capteur de position étant relié à l'organe d'acquisition de stockage et de traitement de données pour transmettre à ce dernier un signal représentatif du débit et/ou la pression de fluide imposé par l'organe de régulation, l'organe d'acquisition de stockage et de traitement de données étant configuré, en réponse à la réception de ce signal de débit et/ou de pression imposé, pour commander l'affichage sur l'afficheur d'une information relative du débit et/ou la pression de fluide imposé par l'organe de régulation et/ou au mode d'utilisation du robinet, l'organe de commande manuelle et/ou l'organe de régulation étant mobile selon une pluralité de positions discrètes correspondants à des valeurs respectives de débit et/ou la pression de fluide admis à passer de l'extrémité amont vers l'extrémité aval .

L'invention concerne un robinet pourvu d'un dispositif électronique d'indication de données physiques relatives au contenu d'une bouteille de fluide sous pression notamment du gaz sous pression. L'invention concerne notamment un dispositif dit de manomètre électronique et digital. On pourra se référer par exemple au document FR2868160A1 qui décrit un exemple d'un tel dispositif.

Un tel dispositif comprend un capteur de pression et une logique électronique qui calcule et affiche des données de quantité de fluide et/ou d'autonomie.

Pour calculer et afficher une telle information fiable d'autonomie le dispositif doit réaliser plusieurs mesures de pression successives avant d'évaluer le débit sélectionné par l'utilisateur du robinet. Ceci génère un temps de calcul qui ne permet pas d'afficher de façon immédiate une autonomie ou de débit de soutirage sélectionné. Un temps de trente à soixante secondes peut par exemple être nécessaire. De plus, ce dispositif a également un temps de réaction identique en cas de changement des paramètres de soutirage (changement du débit de soutirage sélectionné...).

De plus, lorsque le robinet est utilisé pour alimenter en oxygène un ventilateur médical (débit de soutirage imposé par le ventilateur), le signal de pression mesuré par le manomètre subit une oscillation en phase avec les phases de ventilation. Du fait de la grande variété des modes de ventilation, il est difficile de calculer ou d'afficher une information pertinente.

Un tel dispositif ne permet par ailleurs pas de signaler et gérer en même temps certaines situations à risque, notamment lorsque l'utilisateur sélectionne de façon imparfaite un débit de gaz via l'organe de commande manuelle.

Le document WO201511719 A1 décrit un robinet conforme au préambule de la revendication 1.

Dans des dispositifs connus, en cas de sélection d'une valeur incorrecte, une alerte est générée et le débit de gaz soutiré est maintenu ou interrompu.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que lorsque l'organe de commande manuelle est disposé dans une position intermédiaire entre deux valeurs adjacentes respectives de débit et/ou la pression de fluide admis à passer de l'extrémité amont vers l'extrémité aval, l'organe d'acquisition de stockage et de traitement de données est configuré pour supprimer l'affichage d'une information relative au débit et/ou à la pression de fluide imposé par l'organe de régulation ou sélectionner et afficher sur l'afficheur ou émettre l'une ou les deux de ces valeurs adjacentes et/ou une valeur comprise entre ces deux valeurs adjacentes et/ou un intervalle de valeurs défini par ces deux valeurs adjacentes.

Ceci permet d'indiquer rapidement et automatiquement à l'utilisateur que du gaz est soutiré, soit du fait d'une alimentation vers un ventilateur médical, soit du fait d'une fuite.

Par ailleurs, des modes de réalisation, dont ceux de l'invention peuvent comporter l'une ou plusieurs des caractéristiques suivantes :
- lorsque l'organe de commande manuelle est disposé dans une position intermédiaire entre deux valeurs adjacentes respectives de débit et/ou la pression, l'organe d'acquisition de stockage et de traitement de données est configuré pour générer en outre un signal d'avertissement visuel et/ou sonore,
- lorsque l'organe de commande manuelle est disposé dans une position intermédiaire entre deux valeurs adjacentes respectives de débit et/ou la pression de fluide admis à passer de l'extrémité amont vers l'extrémité aval, l'organe d'acquisition de stockage et de traitement de données est configuré pour calculer et afficher sur l'afficheur ou émettre une information d'autonomie ou de contenu de fluide restant dans la bouteille sur la base de la valeur la plus élevée des deux valeurs adjacentes,
- lorsque l'organe de commande manuelle est disposé dans une position intermédiaire entre deux valeurs adjacentes respectives de débit et/ou la pression de fluide admis à passer de l'extrémité amont vers l'extrémité aval, l'organe d'acquisition de stockage et de traitement de données est configuré pour afficher sur l'afficheur d'une information relative au débit et/ou la pression de fluide imposé par l'organe de régulation correspondant à la valeur la plus basse des deux valeurs adjacentes,
- lorsque l'organe de commande manuelle est disposé dans une position intermédiaire entre deux valeurs adjacentes respectives de débit et/ou la pression de fluide admis à passer de l'extrémité amont vers l'extrémité aval, l'organe de régulation est conformé pour autoriser le soutirage d'un débit de fluide non nul compris entre lesdites deux valeurs adjacentes respectives de débit et/ou la pression, notamment la valeur affichée,
- lorsque l'organe de commande manuelle est disposé dans une position intermédiaire entre deux valeurs adjacentes respectives de débit et/ou la pression de fluide admis à passer de l'extrémité amont vers l'extrémité aval, l'organe de régulation est conformé pour autoriser le soutirage d'un débit de fluide égal à l'une desdites deux valeurs adjacentes respectives de débit et/ou la pression,
- l'organe de régulation comprend un régulateur de débit à orifices calibrés dont les orifices calibrés de taille différents peuvent être disposés tour à tour sur le trajet du fluide du premier circuit de soutirage selon la position de l'organe de commande manuelle,
- le capteur de position de l'organe de commande comprend au moins l'un parmi : un capteur capacitif, un capteur optique, un capteur magnétique, un capteur mécanique,
- le capteur de position de l'organe de commande comprend un mécanisme engrenant avec l'organe de commande et un potentiomètre, le mécanisme comportant une pièce mobile formant un curseur du potentiomètre, le capteur de position fournissant une valeur de tension et/ou de résistance déterminée en fonction de la position de l'organe de commande,
- le robinet comporte un capteur de pression destiné à mesurer la pression au sein du volume de stockage d'une bouteille de fluide raccordée au robinet, le capteur de pression étant relié à l'organe d'acquisition de stockage et de traitement de données pour transmettre à ce dernier un signal représentatif de la pression de fluide mesurée, l'organe d'acquisition de stockage et de traitement de données étant configuré, en réponse à la réception de ce signal de pression, pour calculer et afficher sur l'afficheur une information d'autonomie ou de contenu de fluide restant,
- l'organe d'acquisition de stockage et de traitement de données est configuré pour recevoir à la fois le signal de pression mesurée du capteur de pression et le signal de débit et/ou de pression fourni par le capteur de position et pour calculer une information d'autonomie de fluide restant à partir de ces deux informations, l'autonomie de fluide restant étant déterminée en calculant, à partir de la pression initiale mesurée, la diminution temporelle théorique de pression ou de la quantité de gaz générée par le débit et/ou la pression de soutirage imposé par l'organe de régulation,
- l'organe d'acquisition de stockage et de traitement de données est configuré pour :
   - calculer la variation de quantité ou de pression du fluide réelle mesurée par le capteur de pression,
   - calculer la variation de quantité ou de pression de fluide théorique imposée par l'organe de régulation,
   - comparer la variation de quantité ou de pression réelle mesurée par le capteur de pression avec la variation de quantité ou de pression théorique imposée par l'organe de régulation et
   générer un signal d'alerte en cas de divergence entre ces dernières supérieure à un seuil de sécurité déterminé.
- l'organe de commande manuelle de l'organe de régulation est déplaçable dans une position dite « de fermeture » correspondant une fermeture du premier circuit de soutirage, c'est-à-dire que le débit de fluide admis à passer de l'extrémité amont vers l'extrémité aval est nul, lorsque l'organe de commande manuelle est dans sa position de fermeture et que la variation du signal représentatif de la pression de fluide au sein d'une bouteille est inférieure à un seuil de variation déterminé, l'organe d'acquisition de stockage et de traitement de données étant configuré pour commander l'affichage sur l'afficheur d'une information fixe relative à la pression et/ou la quantité de fluide dans la bouteille,
- le capteur de position de l'organe de commande comprend un convertisseur d'un déplacement mécanique de l'organe de commande en un signal électrique exploitable par l'organe d'acquisition de stockage et de traitement de données,
- lorsque l'organe de commande manuelle est dans sa position dite de fermeture et que la variation du signal représentatif de la pression de fluide au sein d'une bouteille est supérieure à un seuil de variation déterminé, l'organe d'acquisition de stockage et de traitement de données est configuré pour calculer une information d'autonomie de fluide restant à partir de la mesure du signal de pression initiale et de la variation de ce signal de pression donné par le capteur de pression, l'organe d'acquisition de stockage et de traitement de données étant configuré pour commander l'affichage sur l'afficheur de cette information d'autonomie calculée et/ou une information relative à la pression ou la quantité initiale de fluide dans la bouteille,
- lorsque l'organe de commande manuelle est dans sa position dite de fermeture et que la variation du signal représentatif de la pression de fluide au sein d'une bouteille est supérieure à un seuil de variation déterminé, l'organe d'acquisition de stockage et de traitement de données est configuré pour détecter au moins une caractéristique de l'allure de la variation de pression de fluide dans la bouteille du fait du soutirage via le second circuit de soutirage, la au moins une caractéristique comprenant : un caractère périodique de la variation de pression ou de quantité, la fréquence de la variation de pression ou de quantité, le niveau de variation de pression ou de quantité,
- au moins l'un des composants et notamment l'un des capteurs (de position, de pression) est du type électrique et alimenté par une pile et/ou un système inductif, ledit au moins un composant pouvant être alimenté de façon non continue pour économiser de l'énergie, l'organe d'acquisition de stockage et de traitement de données peut être configuré pour assurer cette alimentation électrique au moment d'une mesure,
- lorsque l'organe de commande manuelle est dans sa position de fermeture et que la variation du signal représentatif de la pression de fluide au sein d'une bouteille est supérieure à un seuil de variation déterminé, l'organe d'acquisition de stockage et de traitement de données est configuré pour calculer une information d'autonomie de fluide restant à partir de la mesure du signal de pression initiale et de la variation de ce signal de pression donné par le capteur de pression, l'organe d'acquisition de stockage et de traitement de données étant configuré pour commander l'affichage sur l'afficheur de cette information d'autonomie calculée et/ou une information relative à la pression ou la quantité initiale de fluide dans la bouteille,
- l'organe d'acquisition de stockage et de traitement de données est configuré pour recalculer et afficher automatiquement une mise à jour de l'information d'autonomie ou de contenu de fluide à la réception d'un signal du capteur de position indiquant un changement débit et/ou la pression de fluide imposé par l'organe de régulation via l'organe de commande,
- l'organe d'acquisition de stockage et de traitement de données est configuré pour calculer une information d'autonomie ou de contenu de fluide sur un intervalle de temps déterminé compris entre trente secondes et dix minutes et de préférence entre une minute et six minutes, à partir du signal de pression mesuré par le capteur de pression, l'organe d'acquisition de stockage et de traitement de données étant configuré également pour comparer cette information d'autonomie calculée sur la base du signal de pression mesuré par rapport à l'information d'autonomie théorique calculée à partir de la variation de quantité ou de pression imposée par l'organe de régulation,
- l'information d'autonomie ou de contenu de fluide restant dans la bouteille est exprimée en temps restant (respectivement en quantité restante) en divisant la pression initiale mesurée par le capteur de pression (ou respectivement, une quantité du gaz courante), par la variation de pression théorique imposée par l'organe de régulation (respectivement la variation de quantité imposée par l'organe de régulation), selon une formule du type : Temps restant=Pression initiale/variation de pression imposée (ou respectivement : Temps restant=quantité restante/variation de quantité imposée), quantité initiale étant estimée via l'équation des gaz parfait PV=nRT ou des gaz réels PV=ZnRT (unités S.I.), avec P la pression mesurée, V le volume connu de la bouteille, n la quantité , R la constante des gaz parfaits et T la température mesurée ou approximée à la température ambiante mesurée Z la compressibilité connue ou donnée par tableau ou calcul.
- L'invention concerne également un bouteille de fluide sous pression comprenant un robinet selon l'une quelconque des caractéristiques revendiquées.
Selon une particularité possible, après un remplissage de la bouteille et avant un premier soutirage, l'organe d'acquisition de stockage et de traitement de données est configuré pour commander l'affichage sur l'afficheur d'une information fixe relative au contenu de fluide dans la bouteille tant que le capteur de position n'a pas transmis un signal représentatif d'un débit et/ou la pression de fluide soutiré du réservoir pendant une durée déterminée et/ou correspondant à une quantité déterminée de fluide.

D'autres particularités et avantages apparaîtront à la lecture de la description ci-après, faite en référence aux figures dans lesquelles :
- la figure 1 représente une vue de côté, schématique et partielle, illustrant un robinet monté sur une bouteille de gaz sous pression selon un exemple de possible de réalisation de l'invention,
- la figure 2 illustre de façon schématique et partielle, la structure et le fonctionnement d'une partie du robinet de la figure 1,
- les figures 3 à 5 illustrent de façon schématique et partielle, la structure et le fonctionnement de respectivement trois exemples de capteurs de position d'un robinet selon l'invention,
- la figure 6 représente schématiquement deux courbes illustrant des exemples de signaux générés par un ou des capteurs de position de la figure 5,
- les figures 7 et 8 illustrent de façon schématique et partielle, la structure et le fonctionnement de respectivement, un quatrième exemple et un cinquième exemple de capteur de position du robinet selon l'invention,
- la figure 9 représente schématiquement un exemple de courbe de pression mesurée en fonction du temps.

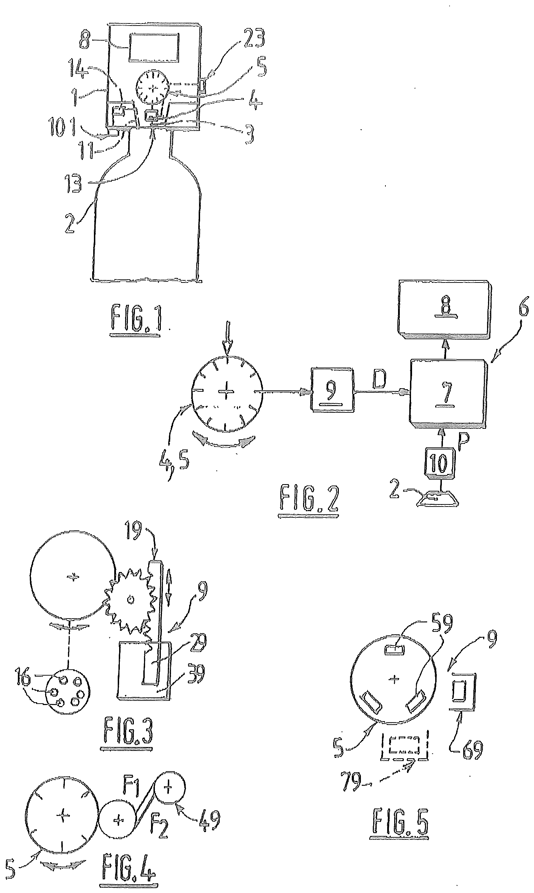

La figure 1 représente schématiquement une bouteille 2 de gaz sous pression munie d'un robinet 1 susceptible de mettre en oeuvre l'invention.

Le robinet 1 comprenant un corps muni d'une extrémité destinée à être montée dans l'orifice d'une bouteille 2 de fluide sous pression (par exemple par vissage).

Classiquement, le corps du robinet 1 abrite un premier circuit 3 de soutirage comprenant une première extrémité 13 amont communiquant avec le volume de stockage de la bouteille 2. Le circuit 3 de soutirage comprend une seconde extrémité 23 aval destinée à être raccordée à un organe utilisateur du gaz soutiré (par exemple un patient dans le cas d'oxygène ou d'un autre gaz médical).

Le premier circuit 3 de soutirage comprend un organe 4 de régulation du débit et/ou de la pression du fluide soutiré entre les extrémités amont 13 et aval 23. Cet organe 4 de régulation est par exemple un régulateur de débit à orifices calibrés 16 permettant de sélectionner un débit de gaz soutiré (cf. la représentation schématiquement de la figure 3). Bien entendu tout autre organe de régulation peut être envisage, par exemple une vanne à ouverture proportionnelle.

Le robinet 1 comprend un organe 5 de commande manuelle de l'organe 4. L'organe 5 de commande est monté mobile relativement au corps du robinet 1 et coopère avec l'organe 4 de régulation pour contrôler le débit et/ou la pression de fluide admis à circuler selon la position de l'organe 5 de commande par rapport au corps du robinet. L'organe 5 de commande comprend par exemple un volant rotatif. Bien entendu, tout autre système approprié peut être envisagé (levier pivotant, commande digitale, commande sans fil via une télécommande...). Par exemple, l'organe 5 de commandes sélectionne un orifice calibré et/ou commande une vanne de restriction de débit en fonction de sa position parmi une pluralité de positions discrètes stables ou une pluralité de positions d'un déplacement continu. En particuliers les positions stables peuvent être référencées mécaniquement par un point dur (par exemple via un système d'encliquetage).

Le robinet 1 comprend un dispositif 6 électronique d'indication de donnée(s) relative(s) au contenu de fluide dans une bouteille 2 raccordée au robinet 1. Le dispositif peut être du type comprenant un organe 7 d'acquisition de stockage et de traitement de données et au moins un afficheur 8 de données relié à l'organe 7 d'acquisition de stockage et de traitement de données. L'organe 7 d'acquisition de stockage et de traitement de données comprend par exemple un calculateur et/ou un microprocesseur ou tout autre système équivalent.

Bien entendu, ce dispositif peut comporter un ou plusieurs organes de réception de données (par connexion filaire et/ou sans fil) ainsi que un ou plusieurs organes d'émission de données (par connexion filaire et/ou sans fil).

Le robinet 1 comporte de préférence un capteur 9 de position de l'organe 5 de commande manuelle de l'organe 4 de régulation. Le capteur 9 de position est relié à l'organe 7 d'acquisition de stockage et de traitement de données pour transmettre à ce dernier un signal représentatif du débit et/ou la pression de fluide imposé par l'organe 4 de régulation. Par exemple, le capteur 9 de position de l'organe 5 de commande comprend un convertisseur du déplacement mécanique de l'organe de commande en un signal électrique exploitable par l'organe 7 d'acquisition de stockage et de traitement de données.

Le détecteur est par exemple solidaire d'une partie fixe du robinet, ou respectivement de l'organe de commande, le détecteur fournissant un signal électrique ou numérique déterminé en fonction de la position de l'organe 5 de commande. Ce signal peut être fourni par voie filaire et/ou sans fil.

Le capteur 9 de position de l'organe 5 de commande peut comprendre par exemple au moins l'un parmi : un capteur capacitif, un capteur magnétique, un capteur mécanique, un capteur optique.

L'organe 5 de commande manuelle et/ou l'organe 4 de régulation peut être mobile selon une pluralité de positions discrètes (mécaniquement stables ou non) correspondant respectivement à des valeurs de débit et/ou la pression de fluide admis à passer de l'extrémité 13 amont vers l'extrémité aval. Selon une particularité avantageuse, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 7 d'acquisition de stockage et de traitement de données est configuré pour sélectionner et afficher sur l'afficheur 8 l'une ou les deux de ces valeurs adjacentes ou une valeur intermédiaire entre ces deux valeurs adjacentes. Alternativement, lorsque l'organe 5 de commande manuelle est disposé dans une position intermédiaire entre deux valeurs adjacentes respectives de débit et/ou de pression, l'organe 7 d'acquisition de stockage et de traitement de données peut être configuré pour afficher un intervalle de débit/pression délimité par les deux valeurs adjacentes. Par exemple, si l'utilisateur positionne l'organe 5 de commande entre les positions « n litre par minute » et « n+1 litre par minute » (n étant un nombre entier), l'organe 7 d'acquisition de stockage et de traitement de données peut être configuré pour afficher « entre n et n+1 litre par minutes ».

En variante, dans ce cas de figure, l'organe 7 d'acquisition de stockage et de traitement de données peut être configuré pour suspendre l'affichage de tout ou partie des informations chiffrées. C'est-à-dire qu'en cas de sélection incorrecte entre deux valeurs adjacentes, l'afficheur n'affiche plus la valeur de débit/pression sélectionnée ni la valeur d'autonomie ou de contenu calculé restant dans la bouteille. Cette dernière solution aura encore plus d'effet sur l'utilisateur pour l'inciter à corriger sa sélection incorrecte.

De préférence, l'organe 7 d'acquisition de stockage et de traitement de données affiche et/ou signale (transmission à distance sans fil ou avec fil ou de façon sonore) la valeur la plus critique ou la plus défavorable pour l'utilisateur.

Ceci permet d'alerter ergonomiquement l'utilisateur d'une manipulation erronée en affichant une information pertinente mais pénalisante l'obligeant à corriger sa sélection.

Par exemple, lorsque l'organe 5 de commande manuelle est disposé dans une position intermédiaire entre deux valeurs adjacentes respectives de débit, l'organe 7 d'acquisition de stockage et de traitement de données est configuré pour calculer et afficher sur l'afficheur 8 une information d'autonomie ou de contenu de fluide restant dans la bouteille sur la base de la valeur la plus élevée des deux valeurs adjacentes.

Ainsi si par exemple l'utilisateur positionne l'organe 5 de commande entre les positions n litre par minute et n+1 litre par minute (n étant un nombre entier), l'organe 7 d'acquisition de stockage et de traitement de données peut être configuré pour calculer une autonomie basée sur la valeur de débit soutiré de n+1 litre par minute (autonomie moindre que si elle avait été calculée avec la valeur de n litre par minute).

De même, lorsque l'organe 5 de commande manuelle est disposé dans une position intermédiaire entre deux valeurs adjacentes respectives de débit, l'organe 7 d'acquisition de stockage et de traitement de données peut être configuré pour afficher sur l'afficheur 8 d'une information relative au débit soutiré imposé par l'organe 4 de régulation correspondant à la valeur la plus basse des deux valeurs adjacentes. Ainsi si par exemple l'utilisateur positionne l'organe 5 de commande entre les positions n litre par minute et n+1 litre par minute (n étant un nombre entier), l'organe 7 d'acquisition de stockage et de traitement de données peut être configuré pour afficher sur l'afficheur 8 une information basée sur la valeur de débit soutiré de n litre par minute (débit le plus faible qui peut par exemple être en-dessous de la prescription médicale). Ceci, en plus ou à la place d'une alarme, fera réagir l'utilisateur en vue de corriger la sélection de débit.

Le dispositif peut être configuré pour dans ce cas délivrer un débit de fluide correspondant à l'une des deux valeurs adjacentes, notamment la valeur affichée.

De préférence, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 4 de régulation est conformé pour autoriser le soutirage d'un débit de fluide non nul compris entre lesdites deux valeurs adjacentes respectives de débit et/ou la pression, notamment la valeur affichée.

Alternativement, lorsque l'organe 5 de commande manuelle est disposé dans une position intermédiaire entre deux valeurs adjacentes respectives de débit et/ou la pression de fluide admis à passer de l'extrémité 13 amont vers l'extrémité aval 23, l'organe 4 de régulation est conformé pour autoriser le soutirage d'un débit de fluide égal à l'une lesdites deux valeurs adjacentes respectives de débit et/ou la pression.

De plus, dans le cas ou l'organe 4 de régulation permet de faire varier de façon continue (non discrète) le débit ou la pression, l'organe 7 d'acquisition de stockage et de traitement de données peut être configuré pour afficher la valeur réelle de débit sélectionnée.

Comme illustré à la figure 3, le capteur 9 de position de l'organe 5 de commande peut comprendre par exemple comprend un mécanisme 19 engrenant avec l'organe 5 de commande (un système à engrenage et/ou crantage) et un potentiomètre 39. Le mécanisme comporte une pièce mobile 29 (par exemple une roue ou une tige ou une crémaillère) formant un curseur du potentiomètre 39. De cette façon, le capteur 9 de position fournit une valeur de tension et/ou de résistance déterminée en fonction de la position de l'organe 5 de commande.

Dans l'exemple de la figure 4, le capteur 9 de position de l'organe 5 de commande comprend un mécanisme engrenant avec l'organe 5 de commande comprenant un codeur optique et/ou numérique 49, par exemple un codeur à fils (fils conducteur et un fil de masse). Le codeur 49 fournit un signal numérique déterminé en fonction de la position de l'organe 5 de commande. Selon la position du mécanisme, un ou plusieurs fils sont sous tension ou court-circuités formant une pluralité de signaux distincts pour caractériser différentes positions (par exemple 2ⁿ⁻¹ pour un système à n fils).

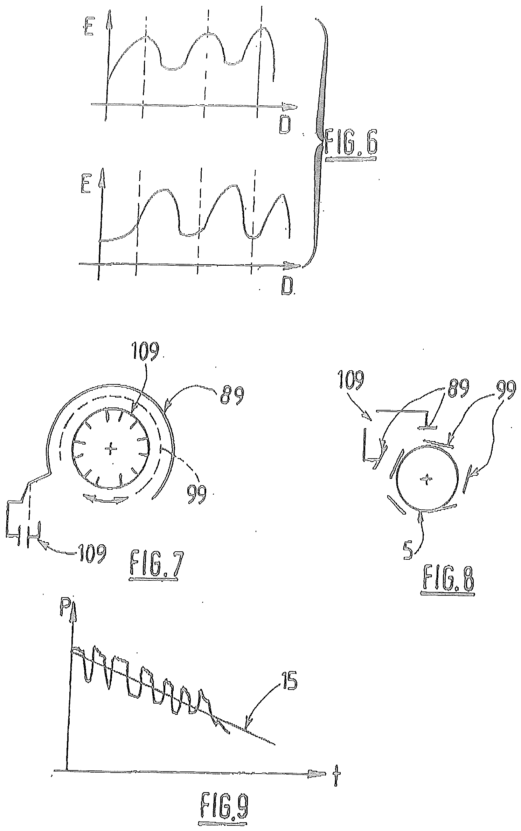

Comme illustré à la figure 5, le capteur 9 de position de l'organe 5 de commande peut comprendre un système magnétique comportant au moins un aimant 59 solidaire de l'organe 5 de commande et au moins un détecteur 69, 79 de champ magnétique du au moins un aimant 59. Par exemple trois aimants 59 sont solidaires de l'organe 5 de commande. En cas de déplacement (tel qu'une rotation) de l'organe 5 de commande, un détecteur 69 détecte par exemple un champ magnétique E en fonction du déplacement D qui oscille et permet de caractériser une pluralité de positions (cf. figure 6). Lorsque le dispositif comprend un second détecteur 79 (ou plus), plusieurs signaux distincts peuvent être exploités simultanément pour améliorer la détection des positions distinctes.

Comme illustré aux figures 7 et 8, le capteur 9 de position de l'organe 5 de commande peut comprendre un système capacitif mesurant 109 une capacité électrique entre une référence fixe 89 magnétique et une partie mobile 99 liée à l'organe 5 de commande

Tous ces systèmes présentent l'avantage d'une détection fiable sans nécessiter de prévoir de fils électriques associés à une partie mobile du mécanisme.

Le système à potentiomètre et plus généralement chaque système de détection peut être calibré facilement en fabrication.

Par exemple, le potentiomètre 39 ou détecteur du capteur 9 de position de l'organe 5 de commande peut être calibré en mesurant la valeur de tension ou de résistance (voir de champ magnétique et de capacité) qu'il fournit correspondant à la position dite de fermeture (débit nul). Puis, il est possible de mesurer la valeur de tension ou de résistance fournie par le potentiomètre 39 correspondant à une position de l'organe 5 de commande extrême par rapport à la position de fermeture. Les valeurs intermédiaires de tension ou de résistance fournie par le potentiomètre 39 étant attribuées respectivement aux positions intermédiaires de l'organe 5 de commande entre la position de fermeture et la position extrême. (Idem pour la détection d'une autre grandeur physique, champ magnétique, capacité... où les positions intermédiaires du signal peuvent être affectées respectivement aux positions intermédiaires de l'organe 5 de commande).

Alternativement ou cumulativement, le potentiomètre 39 du capteur 9 de position de l'organe 5 de commande peut être calibré en mesurant la valeur de tension ou de résistance qu'il fournit correspondant une position de l'organe 5 de commande dans laquelle aucune variation de pression n'est mesurée par le capteur 10 de pression pendant une durée déterminée, par exemple une à trois minutes. Cette position (cette valeur du signal) est définie comme étant la position de fermeture du circuit (débit nul). Ce mode de définition de la position de fermeture peut être appliqué aux autres exemples (champ magnétique, capacité...).

Comme illustré à la figure 2, le robinet comporte de préférence en outre un capteur 10 de pression destiné à mesurer la pression au sein du volume de stockage de la bouteille 2. Le capteur 10 de pression est relié à l'organe 7 d'acquisition de stockage et de traitement de données pour transmettre à ce dernier (par voie filaire et/ou sans fil) un signal représentatif de la pression de fluide mesurée, notamment en temps réel ou périodiquement.

L'organe 7 d'acquisition de stockage et de traitement de données peut être configuré, en réponse à la réception de ce signal de pression délivré par le capteur 10, pour calculer et afficher sur l'afficheur 8 une information d'autonomie ou de contenu de fluide restant.

De préférence l'organe 5 de commande manuelle de l'organe 4 de régulation est déplaçable dans une position dite « de fermeture » correspondant une fermeture du premier circuit 3 de soutirage. C'est-à-dire que le débit de fluide admis à passer de l'extrémité 13 amont vers l'extrémité aval 23 est nul. Dans le cas où l'organe 5 de commande manuelle est dans sa position de fermeture et que la variation du signal représentatif de la pression de fluide au sein d'une bouteille 2 est inférieure à un seuil de variation déterminé (par exemple équivalent à une chute de pression de 10 mbar / min (0,05l/min) mesuré par le capteur 10 de pression), l'organe 7 d'acquisition de stockage et de traitement de données est configuré de préférence pour commander l'affichage sur l'afficheur 8 d'une information fixe relative à la pression et/ou la quantité de fluide dans la bouteille 2.

C'est-à-dire que le dispositif détecte que la bouteille 12 n'est pas soutirée et affiche par exemple une information relative à son contenu.

Comme illustré à la figure 1, le robinet 1 comprend de préférence un second circuit 11 de soutirage, par exemple distinct du premier circuit 3 de soutirage et qui évite l'organe 4 de régulation du débit et/ou la pression du premier circuit de soutirage 3.

Ce second circuit 11 de soutirage peut le cas échéant posséder une portion commune avec le premier circuit 3 de soutirage.

Ce second circuit 11 de soutirage est par exemple prévu pour fournir un gaz à une pression régulée (via un détendeur 14 de pression). Par exemple, le second circuit 11 de soutirage fournit une pression f réglable ou fixe et de l'ordre de 3 à 10 bar à un appareil utilisateur. Par exemple le second circuit 11 de soutirage possède un raccord de sortie 101 (par exemple via une prise crantée) pouvant être relié à un ventilateur médical pour fournir de l'oxygène à ce dernier.

Ce second circuit 11 de soutirage peut alimenter à gaz de la bouteille 2 indépendamment du premier circuit 3 de soutirage. Ainsi, lorsque l'organe 5 de commande manuelle est dans sa position de fermeture et que la variation du signal représentatif de la pression de fluide au sein d'une bouteille 2 (mesuré par le capteur 10 de pression) est supérieure à un seuil de variation déterminé (par exemple 25mbar par minute, l'organe 7 d'acquisition de stockage et de traitement de données peut détecter un soutirage de fluide via le second circuit 11 de soutirage ou, si ce second circuit 11 de soutirage n'est pas utilisé, une éventuelle fuite de fluide.

L'organe 7 d'acquisition de stockage et de traitement de données peut le cas échéant commander l'affichage sur l'afficheur 8 ou l'envoi (sans fil, par voie filaire ou par voie sonore) d'une information relative à un soutirage via le second circuit 11 de soutirage et ou relative à une fuite (signal d'alerte).

En particulier, lorsque l'organe 5 de commande manuelle est dans sa position dite de fermeture et que la variation du signal représentatif de la pression de fluide au sein d'une bouteille est supérieure à un seuil de variation déterminé (par exemple 25 mbar par minute), l'organe 7 d'acquisition de stockage et de traitement de données est configuré pour détecter au moins une caractéristique de l'allure de la variation de pression de fluide dans la bouteille du fait du soutirage via le second circuit de soutirage 11.

La au moins une caractéristique comprend par exemple: un caractère périodique de la variation de pression ou de quantité, la fréquence de la variation de pression ou de quantité, le niveau de variation de pression ou de quantité,...

Comme illustré schématiquement à la figure 10, ceci permet de détecter au bout de deux à trois oscillations de pression instantanément par exemple un soutirage périodique correspondant à une alimentation en gaz d'un ventilateur respiratoire. En effet, même si le gaz soutiré ne passe pas par le régulateur 4 de débit, le débit est régulé directement par un ventilateur et dépend de la respiration du patient. Ce débit ainsi délivré n'est pas constant mais oscille dans le temps (selon la respiration du patient).

L'organe 7 d'acquisition de stockage et de traitement de données peut être configuré pour détecter (reconnaître) une chute de pression caractéristique d'une ventilation selon le principe suivant :
- mesure du signal de pression de façon périodique rapprochée (par exemple toutes les 0,5 à deux secondes, notamment toutes les secondes),
- identification d'un signal de type créneau ayant une fréquence de cinq à vingt-cinq créneaux (respirations) par minute).

Pour calculer l'autonomie restante en gaz à partir d'un tel signal, l'organe 7 d'acquisition de stockage et de traitement de données peut être configuré pour mesurer la chute de pression sur les optimums pour en déduire la pente de décroissance équivalente (cf. référence 15 à la figure 9). Alternativement ou cumulativement, l'organe 7 d'acquisition de stockage et de traitement de données peut être configuré pour faire une moyenne de baisse de pression sur un temps relativement long (plusieurs minutes par exemple dix minutes) de façon à effacer les imprécisions d'image.

Dans le cas où ce signal de pression ne correspond pas à un signal de ventilation (par exemple une variation décroissante continue), l'organe 7 d'acquisition de stockage et de traitement de données peut déterminer qu'il s'agit d'une fuite ou d'une utilisation incorrecte du gaz et peut le signaler de la même façon.

Ainsi, dans ce cas, la détection simultanée de la position de fermeture (graduation « 0 » = « zéro » par exemple) sur le détecteur 5 de position et d'une chute de pression, il est ainsi possible de détecter instantanément et automatiquement le mode d'utilisation de la bouteille 2. Un algorithme de calcul d'autonomie rapide décrit ci-après n'est pas utilisé, et un calcul d'autonomie adapté à ce mode de soutirage peut être réalisé par la l'organe 7 d'acquisition de stockage et de traitement de données.

Cet algorithme de calcul d'autonomie basé sur la mesure de pression 10 peut ainsi être automatiquement enclenché.

De plus, lorsque l'organe 5 de commande manuelle est dans sa position de fermeture et que la variation du signal représentatif de la pression de fluide au sein d'une bouteille 2 est supérieure à un seuil de variation déterminé, l'organe 7 d'acquisition de stockage et de traitement de données peut être configuré pour calculer une information d'autonomie de fluide restant à partir de la mesure du signal de pression initiale et de la variation de ce signal de pression donné par le capteur 10 de pression. L'organe 7 d'acquisition de stockage et de traitement de données peut notamment être configuré pour commander l'affichage sur l'afficheur 8 de cette information d'autonomie calculée et/ou une information relative à la pression ou la quantité initiale de fluide dans la bouteille 2.

Le capteur 10 de pression peut être situé par exemple au niveau de l'extrémité amont du premier circuit 3 de soutirage et/ou au niveau du second 11 circuit de soutirage.

De plus, l'organe 7 d'acquisition de stockage et de traitement de données peut être configuré, en réponse à la réception de ce signal de débit et/ou de pression imposé, pour commander l'affichage sur l'afficheur 8 d'une information relative du débit et/ou la pression de fluide imposé par l'organe 4 de régulation.

L'organe 7 d'acquisition de stockage et de traitement de données peut ainsi être configuré pour recevoir à la fois le signal de pression P mesurée du capteur 10 de pression et le signal de débit et/ou de pression D fourni par le capteur 9 de position. L'organe 7 d'acquisition de stockage et de traitement de données peut ainsi être programmé pour calculer une information d'autonomie de fluide restant à partir de ces deux informations, l'autonomie de fluide restant étant déterminée par exemple en calculant, à partir de la pression initiale mesurée, la diminution temporelle théorique de pression ou de la quantité de gaz générée par le débit et/ou la pression D de soutirage imposé par l'organe 4 de régulation.

De plus, l'organe 7 d'acquisition de stockage et de traitement de données peut être configuré pour :
- calculer la variation de quantité ou de pression du fluide réelle mesurée par le capteur 10 de pression,
- calculer la variation de quantité ou de pression de fluide théorique imposée par l'organe 4 de régulation,
- comparer la variation de quantité ou de pression réelle mesurée par le capteur 10 de pression avec la variation de quantité ou de pression théorique imposée par l'organe 4 de régulation et
- générer un signal d'alerte en cas de divergence entre ces dernières supérieure à un seuil de sécurité déterminé (par exemple une divergence de 15 à 30% et notamment 25%)

L'information d'autonomie ou de contenu de fluide restant dans la bouteille 2 peut être exprimée en temps restant (respectivement en quantité restante) en divisant la pression initiale mesurée par le capteur 10 de pression (ou respectivement, une quantité du gaz courante), par la variation de pression théorique imposée par l'organe 4 de régulation (respectivement la variation de quantité imposée par l'organe (4) de régulation), selon une formule par exemple du type : Temps restant=Pression initiale/variation de pression imposée (ou respectivement : Temps restant= Contenu de fluide restant/variation de quantité imposée).

Les variations de quantité ou de pression théoriques peuvent être calculées par exemple via l'équation des gaz parfait PV=nRT ou réels PV= ZnRT (unités S.l.), avec P la pression mesurée, V le volume connu de la bouteille, n la quantité , R la constante des gaz parfaits et T la température mesurée ou approximée à la température ambiante mesurée, Z le facteur de compressibilité supposé connu (table ou calcul). De même les conversions entre pression et quantité peuvent être calculées via l'équation des gaz parfait ou toute autre formule équivalente, le volume de la bouteille 2 étant connu et renseigné dans le l'organe 7 d'acquisition de stockage et de traitement de données et la température peut être mesurée par un capteur extérieur ambiant ou calculée ou renseignée ou approximée

L'organe 7 d'acquisition de stockage et de traitement de données peut être configuré pour calculer une information d'autonomie ou de contenu de fluide sur un intervalle de temps déterminé compris entre quinze secondes et dix minutes et de préférence entre trente secondes et cinq minutes, à partir du signal de pression mesuré par le capteur 10 de pression. L'organe 7 d'acquisition de stockage et de traitement de données peut être configuré également pour comparer cette information d'autonomie calculée sur la base du signal de pression P mesuré par rapport à l'information d'autonomie théorique calculée à partir de la variation de quantité ou de pression imposée par l'organe 4 de régulation.

La mesure dynamique de pression peut permettre de réajuster si besoin plus précisément l'affichage du débit effectif soutiré et/ou l'autonomie affichée.

De même, l'organe 7 d'acquisition de stockage et de traitement de données peut être configuré pour recalculer et afficher automatiquement une mise à jour de l'information d'autonomie ou de contenu de fluide à la réception d'un signal du capteur 9 de position indiquant un changement débit et/ou la pression de fluide imposé par l'organe 4 de régulation via l'organe 5 de commande.

De plus, l'organe 7 d'acquisition de stockage et de traitement de données peut être configuré pour comporter une fonction de sceau garantie indiquant que la bouteille 2 n'a pas été utilisée suite à un remplissage. Ainsi, avant un premier soutirage, l'organe 7 d'acquisition de stockage et de traitement de données peut commander l'affichage sur l'afficheur 8 d'une information fixe relative au contenu de fluide dans la bouteille 2 (et/ou l'information du type « bouteille pleine ») tant que le capteur 9 de position n'a pas transmis un signal représentatif d'un débit et/ou la pression de fluide soutiré du réservoir 2 pendant une durée déterminée et/ou correspondant à une quantité déterminée de fluide (par exemple 20 litres de gaz soutiré). Cette détection peut être assurée ou complétée par l'information donnée par le capteur 10 de pression.

Bien que l'invention soit relativement simple et peu coûteuse on conçoit aisément qu'elle permet d'afficher plus rapidement des informations de débit et d'autonomie.

L'invention s'applique avantageusement aux bouteilles de gaz sous pression, notamment aux bouteilles contenant de l'oxygène sous pression.

## Revendications

1. Robinet pour bouteille de fluide sous pression comprenant un corps muni d'une extrémité destinée à être montée dans l'orifice d'une bouteille de fluide sous pression, le corps du robinet (1) abritant un premier circuit (3) de soutirage comprenant une première extrémité (13) amont destinée à communiquer le volume de stockage d'une bouteille de fluide sous pression et une seconde extrémité (23) aval destinée à être raccordée à un organe utilisateur du gaz soutiré, le premier circuit (3) de soutirage comprenant un organe (4) de régulation du débit et/ou de la pression du fluide soutiré entre les extrémités amont (13) et aval (23), le robinet (1) comprenant un organe (5) de commande manuelle de l'organe (4) de régulation, l'organe (5) de commande étant monté mobile relativement au corps du robinet (1) et coopérant avec l'organe (4) de régulation pour contrôler le débit et/ou la pression de fluide admis à circuler de l'extrémité (13) amont vers l'extrémité aval (23) selon la position de l'organe (5) de commande par rapport au corps (5), le robinet (1) comprenant un dispositif (6) électronique d'indication de donnée(s) relative(s) au contenu de fluide dans une bouteille raccordée au robinet (1), le dispositif (6) électronique d'indication comprenant un organe (7) d'acquisition de stockage et de traitement de données et au moins un afficheur (8) de données relié à l'organe (7) d'acquisition de stockage et de traitement de données, le robinet (1) comprenant un capteur (9) de position de l'organe (5) de commande manuelle de l'organe (4) de régulation, le capteur (9) de position étant relié à l'organe (7) d'acquisition de stockage et de traitement de données pour transmettre à ce dernier un signal représentatif du débit et/ou la pression de fluide imposé par l'organe (4) de régulation, l'organe (7) d'acquisition de stockage et de traitement de données étant configuré, en réponse à la réception de ce signal de débit et/ou de pression imposé, pour commander l'affichage sur l'afficheur (8) d'une information relative du débit et/ou la pression de fluide imposé par l'organe (4) de régulation et/ou au mode d'utilisation du robinet, **caractérisé en ce que** l'organe (5) de commande manuelle et/ou l'organe (4) de régulation est mobile selon une pluralité de positions discrètes correspondants à des valeurs respectives de débit et/ou la pression de fluide admis à passer de l'extrémité (13) amont vers l'extrémité aval (23) et **en ce que** lorsque l'organe (5) de commande manuelle est disposé dans une position intermédiaire entre deux valeurs adjacentes respectives de débit et/ou la pression de fluide admis à passer de l'extrémité (13) amont vers l'extrémité aval (23), l'organe (7) d'acquisition de stockage et de traitement de données est configuré pour supprimer l'affichage d'une information relative au débit et/ou à la pression de fluide imposé par l'organe (4) de régulation ou sélectionner et afficher sur l'afficheur (8) ou émettre l'une ou les deux de ces valeurs adjacentes et/ou une valeur comprise entre ces deux valeurs adjacentes et/ou un intervalle de valeurs défini par ces deux valeurs adjacentes.

2. Robinet selon la revendication 1, **caractérisé en ce que** lorsque l'organe (5) de commande manuelle est disposé dans une position intermédiaire entre deux valeurs adjacentes respectives de débit et/ou la pression, l'organe (7) d'acquisition de stockage et de traitement de données est configuré pour générer en outre un signal d'avertissement visuel et/ou sonore.

3. Robinet selon la revendication 1 ou 2, **caractérisé en ce que** lorsque l'organe (5) de commande manuelle est disposé dans une position intermédiaire entre deux valeurs adjacentes respectives de débit et/ou la pression de fluide admis à passer de l'extrémité (13) amont vers l'extrémité aval (23), l'organe (7) d'acquisition de stockage et de traitement de données est configuré pour calculer et afficher sur l'afficheur (8) ou émettre une information d'autonomie ou de contenu de fluide restant dans la bouteille sur la base de la valeur la plus élevée des deux valeurs adjacentes.

4. Robinet selon l'une quelconque des revendications 1 à 3, **caractérisé en ce que** lorsque l'organe (5) de commande manuelle est disposé dans une position intermédiaire entre deux valeurs adjacentes respectives de débit et/ou la pression de fluide admis à passer de l'extrémité (13) amont vers l'extrémité aval (23), l'organe (7) d'acquisition de stockage et de traitement de données est configuré pour afficher sur l'afficheur (8) d'une information relative au débit et/ou la pression de fluide imposé par l'organe (4) de régulation correspondant à la valeur la plus basse des deux valeurs adjacentes.

5. Robinet selon l'une quelconque des revendications 1 à 4, **caractérisé en ce que** lorsque l'organe (5) de commande manuelle est disposé dans une position intermédiaire entre deux valeurs adjacentes respectives de débit et/ou la pression de fluide admis à passer de l'extrémité (13) amont vers l'extrémité aval (23), l'organe (4) de régulation est conformé pour autoriser le soutirage d'un débit de fluide non nul compris entre lesdites deux valeurs adjacentes respectives de débit et/ou la pression, notamment la valeur affichée.

6. Robinet selon l'une quelconque des revendications 1 à 4, **caractérisé en ce que** lorsque l'organe (5) de commande manuelle est disposé dans une position intermédiaire entre deux valeurs adjacentes respectives de débit et/ou la pression de fluide admis à passer de l'extrémité (13) amont vers l'extrémité aval (23), l'organe (4) de régulation est conformé pour autoriser le soutirage d'un débit de fluide égal à l'une desdites deux valeurs adjacentes respectives de débit et/ou la pression.

7. Robinet selon l'une quelconque des revendications 1 à 6, **caractérisé en ce que** l'organe (4) de régulation comprend un régulateur de débit à orifices calibrés (16) dont les orifices (16) calibrés de taille différents peuvent être disposés tour à tour sur le trajet du fluide du premier (3) circuit de soutirage selon la position de l'organe (5) de commande manuelle.

8. Robinet selon l'une quelconque des revendications 1 à 7, **caractérisé en ce que** le capteur (9) de position de l'organe (5) de commande comprend au moins l'un parmi : un capteur capacitif, un capteur optique, un capteur magnétique, un capteur mécanique.

9. Robinet selon l'une quelconque des revendications 1 à 8, **caractérisé en ce que** le capteur (9) de position de l'organe (5) de commande comprend un mécanisme (19) engrenant avec l'organe (5) de commande et un potentiomètre (39), le mécanisme comportant une pièce mobile (29) formant un curseur du potentiomètre (39), le capteur (9) de position fournissant une valeur de tension et/ou de résistance déterminée en fonction de la position de l'organe (5) de commande.

10. Robinet selon l'une quelconque des revendications 1 à 9, **caractérisé en ce qu'**il comporte un capteur (10) de pression destiné à mesurer la pression au sein du volume de stockage d'une bouteille (2) de fluide raccordée au robinet (1), le capteur (10) de pression étant relié à l'organe (7) d'acquisition de stockage et de traitement de données pour transmettre à ce dernier un signal représentatif de la pression de fluide mesurée, l'organe (7) d'acquisition de stockage et de traitement de données étant configuré, en réponse à la réception de ce signal de pression, pour calculer et afficher sur l'afficheur (8) une information d'autonomie ou de contenu de fluide restant.

11. Robinet selon la revendication 10, **caractérisé en ce que** l'organe (7) d'acquisition de stockage et de traitement de données est configuré pour recevoir à la fois le signal de pression (P) mesurée du capteur (10) de pression et le signal de débit et/ou de pression (D) fourni par le capteur (9) de position et pour calculer une information d'autonomie de fluide restant à partir de ces deux informations, l'autonomie de fluide restant étant déterminée en calculant, à partir de la pression initiale mesurée, la diminution temporelle théorique de pression ou de la quantité de gaz générée par le débit et/ou la pression (D) de soutirage imposé par l'organe (4) de régulation.

12. Robinet selon la revendication 10 ou 11, **caractérisé en ce que** l'organe (7) d'acquisition de stockage et de traitement de données est configuré pour :
- calculer la variation de quantité ou de pression du fluide réelle mesurée par le capteur (10) de pression,
- calculer la variation de quantité ou de pression de fluide théorique imposée par l'organe (4) de régulation,
- comparer la variation de quantité ou de pression réelle mesurée par le capteur (10) de pression avec la variation de quantité ou de pression théorique imposée par l'organe (4) de régulation et
- générer un signal d'alerte en cas de divergence entre ces dernières supérieure à un seuil de sécurité déterminé.

13. Robinet selon l'une quelconque des revendications 10 à 12, **caractérisé en ce que** l'organe (5) de commande manuelle de l'organe (4) de régulation est déplaçable dans une position dite « de fermeture » correspondant une fermeture du premier circuit (3) de soutirage, c'est-à-dire que le débit de fluide admis à passer de l'extrémité (13) amont vers l'extrémité aval (23) est nul, et **en ce que**, lorsque l'organe (5) de commande manuelle est dans sa position de fermeture et que la variation du signal représentatif de la pression de fluide au sein d'une bouteille est inférieure à un seuil de variation déterminé, l'organe (7) d'acquisition de stockage et de traitement de données est configuré pour commander l'affichage sur l'afficheur (8) d'une information fixe relative à la pression et/ou la quantité de fluide dans la bouteille (2).

14. Bouteille de fluide sous pression **caractérisé en ce qu'**elle comprend un robinet selon l'une quelconque des revendications 1 à 13.

15. Bouteille selon la revendication 14 **caractérisée en ce que**, après un remplissage de la bouteille et avant un premier soutirage, l'organe (7) d'acquisition de stockage et de traitement de données est configuré pour commander l'affichage sur l'afficheur (8) d'une information fixe relative au contenu de fluide dans la bouteille tant que le capteur (9) de position n'a pas transmis un signal représentatif d'un débit et/ou la pression de fluide soutiré du réservoir (2) pendant une durée déterminée et/ou correspondant à une quantité déterminée de fluide.

## Patentansprüche

1. Hahn für Fluidflasche unter Druck, der einen Körper umfasst, der mit einem Ende versehen ist, das dazu bestimmt ist, in die Öffnung einer Fluidflasche unter Druck montiert zu sein, wobei der Körper des Hahns (1) einen ersten Abzapfkreislauf (3)aufnimmt, der ein erstes stromaufwärtiges Ende (13) umfasst, das dazu bestimmt ist, den Lagerraum einer Fluidflasche unter Druck zu kommunizieren, und ein zweites stromabwärtiges Ende (23), das dazu bestimmt ist, an ein Benutzerorgan des abgezapften Gases angeschlossen zu sein, wobei der erste Abzapfkreislauf (3) ein Organ (4) zum Regulieren des Durchflusses und/oder des Drucks des Fluids, das zwischen dem stromaufwärtigen (13) und dem stromabwärtigen (23) Ende abgezapft wird, umfasst, wobei der Hahn (1) ein manuelles Steuerorgan (5) des Organs (4) zum Regulieren umfasst, wobei das Steuerorgan in Bezug auf den Körper des Hahns (1) beweglich montiert ist und mit dem Organ (4) zum Regulieren zusammenwirkt, um den Durchfluss und/oder den Druck von Fluid, das zum Zirkulieren von dem stromaufwärtigen Ende (13) zu dem stromabwärtigen Ende (23) eingelassen wird, gemäß der Position des Steuerorgans (5) in Bezug auf den Körper (5) zu steuern, wobei der Hahn (1) eine elektronische Vorrichtung (6) zur Angabe von Daten in Zusammenhang mit dem Fluidinhalt in der Flasche, die an den Hahn (1) angeschlossen ist, umfasst, wobei die elektronische Vorrichtung (6) zur Angabe ein Lagererfassungs- und Datenverarbeitungsorgan (7) umfasst, und mindestens einen Datenanzeiger (8), der mit dem Lagererfassungs- und Datenverarbeitungsorgan (7) verbunden ist, wobei der Hahn (1) einen Positionssensor (9) des manuellen Steuerorgans (5) des Organs (4) zum Regulieren umfasst, wobei der Positionssensor (9) mit dem Lagererfassungs- und Datenverarbeitungsorgan (7) verbunden ist, um diesem Letzteren ein Signal zu übertragen, das für den Durchfluss und/oder den Druck von Fluid, der von dem Organ (4) zum Regulieren auferlegt wird, repräsentativ ist, wobei das Lagererfassungs-und Datenverarbeitungsorgan (7) konfiguriert ist, um als Reaktion auf den Empfang dieses Signals von Durchfluss und/oder auferlegtem Druck, die Anzeige auf dem Anzeiger (8) einer Information in Zusammenhang mit dem Durchfluss und/oder dem Fluiddruck, der von dem Organ (4) zum Regulieren auferlegt wird, und/oder mit dem Verwendungsmodus des Hahns zu steuern, **dadurch gekennzeichnet, dass** das manuelle Steuerorgan (5) und/oder das Organ (4) zum Regulieren gemäß einer Vielzahl getrennter Positionen beweglich ist, die jeweiligen Werten von Durchfluss und/oder des Drucks von Fluid entsprechen, das zum Durchgehen von dem stromaufwärtigen Ende (13) zu dem stromabwärtigen Ende (23) eingelassen wird, und dadurch, dass, wenn das manuelle Steuerorgan (5) in einer Zwischenposition zwischen zwei benachbarten jeweiligen Werten von Durchfluss und/oder des Drucks von Fluid, das zum Durchgehen von dem stromaufwärtigen Ende (13) zu dem stromabwärtigen Ende (23) eingelassen wird, das Lagererfassungs- und Datenverarbeitungsorgan (7) konfiguriert ist, um das Anzeigen einer Information in Zusammenhang mit dem Durchfluss und/oder dem Druck von Fluid, der von dem Organ (4) zum Regulieren auferlegt wird, zu eliminieren oder einen der zwei dieser benachbarten Werte und/oder einen Wert zwischen diesen zwei benachbarten Werten und/oder ein Werteintervall, das von diesen zwei benachbarten Werten definiert ist, auszuwählen und auf dem Anzeiger (8) anzuzeigen oder auszugeben.

2. Hahn nach Anspruch 1, **dadurch gekennzeichnet, dass**, wenn das manuelle Steuerorgan (5) in einer Zwischenposition zwischen zwei benachbarten jeweiligen Werten von Durchfluss und/oder dem Druck angeordnet ist, das Lagererfassungs- und Datenverarbeitungsorgan (7) konfiguriert ist, um weiter ein visuelles und/oder akustisches Warnsignal zu erzeugen.

3. Hahn nach Anspruch 1 oder 2, **dadurch gekennzeichnet, dass**, wenn das manuelle Steuerorgan (5) in einer Zwischenposition zwischen zwei benachbarten jeweiligen Werten von Durchfluss und/oder dem Druck von Fluid, das zum Durchgehen von dem stromaufwärtigen Ende (13) zu dem stromabwärtigen Ende (23) eingelassen wird, angeordnet ist, das Lagererfassungs- und Datenverarbeitungsorgan (7) konfiguriert ist, um eine Autonomieinformation oder Information über den Inhalt von Fluid, der in der Flasche bleibt, auf der Basis des höheren Werts der zwei benachbarten Werte zu berechnen und auf dem Anzeiger (8) anzuzeigen oder auszugeben.

4. Hahn nach einem der Ansprüche 1 bis 3, **dadurch gekennzeichnet, dass**, wenn das manuelle Steuerorgan (5) in einer Zwischenposition zwischen zwei benachbarten jeweiligen Werten für Durchfluss und/oder den Druck von Fluid, das zum Durchgehen von dem stromaufwärtigen Ende (13) zu dem stromabwärtigen Ende (23) eingelassen wird, angeordnet ist, das Lagererfassungs- und Datenverarbeitungsorgan (7) konfiguriert ist, um eine Information in Zusammenhang mit dem Durchfluss und/oder dem Druck von Fluid, der von dem Organ (4) zum Regulieren auferlegt wird, der dem niedrigeren Wert der zwei benachbarten Werte entspricht, auf dem Anzeiger (8) anzuzeigen.

5. Hahn nach einem der Ansprüche 1 bis 4, **dadurch gekennzeichnet, dass**, wenn das manuelle Steuerorgan (5) in einer Zwischenposition zwischen zwei benachbarten jeweiligen Werten für Durchfluss und/oder den Druck von Fluid, das zum Durchgehen von dem stromaufwärtigen Ende (13) zu dem stromabwärtigen Ende (23) eingelassen wird, angeordnet ist, das Organ (4) zum Regulieren gestaltet ist, um das Abzapfen eines Fluiddurchflusses nicht gleich null, der zwischen den zwei benachbarten jeweiligen Werten für Durchfluss und/oder Druck liegt, insbesondere des angezeigten Werts, zu gestatten.

6. Hahn nach einem der Ansprüche 1 bis 4, **dadurch gekennzeichnet, dass**, wenn das manuelle Steuerorgan (5) in einer Zwischenposition zwischen zwei benachbarten jeweiligen Werten von Durchfluss und/oder dem Druck von Fluid, das zum Durchgehen von dem stromaufwärtigen Ende (13) zu dem stromabwärtigen Ende (23) eingelassen wird, angeordnet ist, das Organ (4) zum Regulieren gestaltet ist, um das Abzapfen eines Fluiddurchflusses gleich einem der zwei benachbarten jeweiligen Werte für Durchfluss und/oder den Druck zu gestatten.

7. Hahn nach einem der Ansprüche 1 bis 6, **dadurch gekennzeichnet, dass** das Organ (4) zum Regulieren einen Durchflussregler mit kalibrierten Öffnungen (16) umfasst, dessen Öffnungen (16), die mit unterschiedlicher Größe kalibriert sind, der Reihe nach auf dem Verlauf des Fluids des ersten (3) Abzapfkreislaufs gemäß der Position des manuellen Steuerorgans (5) angeordnet werden können.

8. Hahn nach einem der Ansprüche 1 bis 7, **dadurch gekennzeichnet, dass** der Positionssensor (9) des Steuerorgans (5) mindestens eines der Folgenden umfasst: einen kapazitiven Sensor, einen optischen Sensor, einen magnetischen Sensor, einen mechanischen Sensor.

9. Hahn nach einem der Ansprüche 1 bis 8, **dadurch gekennzeichnet, dass** der Positionssensor (9) des Steuerorgans (5) einen Mechanismus (19) umfasst, der in das Steuerorgan (5) eingreift, und ein Potentiometer (39), wobei der Mechanismus ein bewegliches Teil (29) umfasst, das einen Läufer des Potentiometers (39) bildet, wobei der Positionssensor (9) einen Spannungs- und/oder Widerstandswert liefert, der in Abhängigkeit von der Position des Steuerorgans (5) bestimmt wird.

10. Hahn nach einem der Ansprüche 1 bis 9, **dadurch gekennzeichnet, dass** er einen Drucksensor (10) umfasst, der dazu bestimmt ist, den Druck innerhalb des Lagerraums einer Fluidflasche (2), die an den Hahn (1) angeschlossen ist, zu messen, wobei der Drucksensor (10) mit dem Lagererfassungs- und Datenverarbeitungsorgan (7) verbunden ist, um diesem Letzteren ein Signal zu übertragen, das für den gemessenen Fluiddruck repräsentativ ist, wobei das Lagererfassungs- und Datenverarbeitungsorgan (7) konfiguriert ist, um als Reaktion auf den Empfang dieses Drucksignals eine Autonomieinformation oder Information über den restlichen Fluidinhalt zu berechnen und auf dem Anzeiger (8) anzuzeigen.

11. Hahn nach Anspruch 10, **dadurch gekennzeichnet, dass** das Lagererfassungs- und Datenverarbeitungsorgan (7) konfiguriert ist, um sowohl das Drucksignal (P), das von dem Drucksensor (10) gemessen wird, als auch das Durchfluss- und/oder Drucksignal (D), das von dem Positionssensor (9) geliefert wird, zu empfangen, und eine Autonomieinformation restlichen Fluids ausgehend von diesen zwei Informationen zu berechnen, wobei die Autonomie restlichen Fluids bestimmt wird, indem ausgehend von dem anfänglich gemessenen Druck die zeitliche theoretische Verringerung von Druck oder der Menge an Gas, die von dem Durchfluss und/oder dem Abzapfdruck (D), der von dem Organ (4) zum Regulieren auferlegt wird, erzeugt wird, berechnet wird.

12. Hahn nach Anspruch 10 oder 11, **dadurch gekennzeichnet, dass** das Lagererfassungs- und Datenverarbeitungsorgan (7) konfiguriert ist, um:
- die reale Variation von Menge oder Druck des Fluids, die von dem Drucksensor (10) gemessen wird, zu berechnen,
- die theoretische Variation von Menge oder Druck des Fluids, die von dem Organ (4) zum Regulieren auferlegt wird, zu berechnen,
- die reale Variation von Menge oder Druck, die von dem Drucksensor (10) gemessen wird, mit der von dem Organ (4) zum Regulieren auferlegten theoretischen Variation von Menge oder Druck zu vergleichen, und
- ein Warnsignal im Fall einer Abweichung zwischen diesen Letzteren, die größer ist, als ein bestimmter Sicherheitsschwellenwert, zu erzeugen.

13. Hahn nach einem der Ansprüche 10 bis 12, **dadurch gekennzeichnet, dass** das manuelle Steuerorgan (5) des Organ (4) zum Regulieren in eine sogenannte "Verschlussposition" bewegbar ist, die einem Schließen des ersten Abzapfkreislaufs (3) entspricht, das heißt, dass der Fluiddurchfluss, der zum Durchgehen von dem stromaufwärtigen Ende (13) zu dem stromabwärtigen Ende (23) eingelassen wird, gleich null ist, und dadurch dass, wenn das manuelle Steuerorgan (5) in seiner Schließposition ist und die Variation des Signals, das für den Fluiddruck innerhalb einer Flasche repräsentativ ist, kleiner ist als ein bestimmter Variationsschwellenwert, das Lagererfassungs- und Datenverarbeitungsorgan (7) konfiguriert ist, um das Anzeigen auf dem Anzeiger (8) einer stationären Information in Zusammenhang mit dem Druck und/oder der Fluidmenge in der Flasche (2) zu steuern.

14. Fluidflasche unter Druck, **dadurch gekennzeichnet, dass** sie einen Hahn nach einem der Ansprüche 1 bis 13 umfasst.

15. Flasche nach Anspruch 14, **dadurch gekennzeichnet, dass**, nach einem Füllen der Flasche und vor einem ersten Abzapfen das Lagererfassungs- und Datenverarbeitungsorgan (7) konfiguriert ist, um das Anzeigen auf dem Anzeiger (8) einer stationären Information in Zusammenhang mit dem Fluidinhalt in der Flasche zu steuern, solange der Positionssensor (9) kein Signal übertragen hat, das für einen Durchfluss und/oder den Druck von abgezapftem Fluid des Behälters (2) während einer bestimmten Dauer und/oder einer bestimmten Fluidmenge entsprechend übertragen hat.

## Claims

1. Valve for a pressurized fluid cylinder comprising a body provided with an end intended to be mounted in the orifice of a pressurised fluid cylinder, with the body of the valve (1) housing a first circuit (3) for withdrawing comprising a first upstream end (13) intended to communicate the storage volume of a pressurised fluid cylinder and a second downstream end (23) intended to be connected to a member that uses the withdrawn gas, with the first withdrawing circuit (3) comprising a flow- and/or pressure-regulating member (4) of the withdrawn fluid between the upstream (13) and downstream ends (23), with the valve (1) comprising a member (5) for manually controlling the regulating member (4), the control member (5) being mounted mobile relatively to the body of the valve (1) and cooperating with the regulating member (4) in order to control the flow and/or the pressure of fluid allowed to circulate from the upstream end (13) to the downstream end (23) according to the position of the control member (5) in relation to the body (5), with the valve (1) comprising an electronic device (6) for indicating data concerning the fluid content in a cylinder connected to the valve (1), with the electronic device (6) for indicating comprising a data-acquisition, -storage and -processing member (7) and at least one data display (8) connected to the data-acquisition, -storage and -processing member (7), with the valve (1) comprising a sensor (9) for detecting the position of the manual control member (5) of the regulating member (4), with the sensor (9) for detecting the position being connected to the data-acquisition, -storage and -processing member (7) in order to transmit to the latter a signal representing the flow and/or the pressure of fluid imposed by the regulating member (4), the data-acquisition, -storage and -processing member (7) being configured, in response to the reception of this signal of flow and/or of pressure imposed, in order to control the display on the display (8) of information concerning the flow and/or the pressure of fluid imposed by the regulating member (4) and/or the usage mode of the valve, **characterised in that** the manual control member (5) and/or the regulating member (4) is mobile according to a plurality of discrete positions corresponding to respective values of flow and/or the pressure of fluid allowed to pass from the upstream end (13) to the downstream end (23) and **in that** when the manual control member (5) is arranged in an intermediate position between two respective adjacent values of fluid flow and/or pressure allowed to pass from the upstream end (13) to the downstream end (23), the data-acquisition, -storage and -processing member (7) is configured to delete the display of information concerning the flow and/or the pressure of fluid imposed by the regulating member (4) or to select and display on the display (8) or to emit one or both of these adjacent values and/or a value between these two adjacent values and/or a range of values defined by these two adjacent values.

2. Valve according to claim 1, **characterised in that** when the manual control member (5) is arranged in an intermediate position between two respective adjacent values of the flow and/or pressure, the data-acquisition, -storage and -processing member (7) is configured to generate furthermore a visual and/or audible warning signal.

3. Valve according to claim 1 or 2, **characterised in that** when the manual control member (5) is arranged in an intermediate position between two respective adjacent values of fluid flow and/or pressure allowed to pass from the upstream end (13) to the downstream end (23), the data-acquisition, -storage and -processing member (7) is configured to calculate and display on the display (8) or to emit information of the autonomy or content of fluid remaining in the cylinder based on the higher value of the two adjacent values.

4. Valve according to any of claims 1 to 3, **characterised in that** when the manual control member (5) is arranged in an intermediate position between two respective adjacent values of fluid flow and/or pressure allowed to pass from the upstream end (13) to the downstream end (23), the data-acquisition, -storage and -processing member (7) is configured to display on the display (8) information concerning the flow and/or the pressure of fluid imposed by the regulating member (4) corresponding to the lower value of the two adjacent values.

5. Valve according to any of claims 1 to 4, **characterised in that** when the manual control member (5) is arranged in an intermediate position between two respective adjacent values of fluid flow and/or pressure allowed to pass from the upstream end (13) to the downstream end (23), the regulating member (4) is conformed to authorise the withdrawal of a non-zero flow of fluid between said two respective adjacent values of flow and/or pressure, in particular the displayed value.

6. Valve according to any of claims 1 to 4, **characterised in that** when the manual control member (5) is arranged in an intermediate position between two respective adjacent values of fluid flow and/or pressure allowed to pass from the upstream end (13) to the downstream end (23), the regulating member (4) is conformed to authorise the withdrawal of a flow of fluid equal to one of said two respective adjacent values of flow and/or pressure.

7. Valve according to any of claims 1 to 6, **characterised in that** the regulating member (4) comprises a flow regulator with calibrated orifices (16) of which the calibrated orifices (16) of different sizes can be arranged in turn on the path of the fluid of the first (3) withdrawing circuit according to the position of the manual control member (5).

8. Valve according to any of claims 1 to 7, **characterised in that** the sensor (9) for detecting the position of the control member (5) comprises at least one among: a capacitive sensor, an optical sensor, a magnetic sensor, a mechanical sensor.

9. Valve according to any of claims 1 to 8, **characterised in that** the sensor (9) for detecting the position of the control member (5) comprises a mechanism (19) meshing with the control member (5) and a potentiometer (39), with the mechanism comprising a mobile part (29) forming a cursor of the potentiometer (39), with the sensor (9) for detecting the position supplying a voltage and/or resistance value determined according to the position of the control member (5).

10. Valve according to any of claims 1 to 9, **characterised in that** it comprises a pressure sensor (10) intended to measure the pressure in the storage volume of a fluid cylinder (2) connected to the valve (1), with the pressure sensor (10) being connected to the data-acquisition, -storage and -processing member (7) in order to transmit to the latter a signal representing the measured fluid pressure, the data-acquisition, -storage and -processing member (7) being configured, in response to the reception of this pressure signal, in order to calculate and display on the display (8) information on the autonomy or fluid content remaining.

11. Valve according to claim 10, **characterised in that** the data-acquisition, -storage and -processing member (7) is configured to receive both the pressure signal (P) measured from the pressure sensor (10) and the signal of flow and/or pressure (D) supplied by the sensor (9) for detecting the position and for calculating information on the autonomy of fluid remaining using these two pieces of information, with the autonomy of fluid remaining being determined by calculating, using the initial pressure measured, the theoretical temporal decrease in pressure or in the quantity of gas generated by the flow and/or the withdrawing pressure (D) imposed by the regulating member (4).

12. Valve according to claim 10 or 11, **characterised in that** the data-acquisition, - storage and -processing member (7) is configured to:
- calculate the actual variation in quantity or in pressure of the fluid measured by the pressure sensor (10),
- calculate the theoretical variation in quantity or pressure of fluid imposed by the regulating member (4),
- compare the actual variation in quantity or in pressure measured by the pressure sensor (10) with the theoretical variation in quantity or pressure imposed by the regulating member (4) and
- generate an alert signal in case of divergence between the latter greater than a determined safety threshold.

13. Valve according to any of claims 10 to 12, **characterised in that** the manual control member (5) of the regulating member (4) can be displaced in a so-called "closed" position that corresponds to a closing of the first withdrawing circuit (3), i.e. the flow of the fluid allowed to pass from the upstream end (13) to the downstream end (23) is zero, and **in that**, when the manual control member (5) is in its closed position and the variation of the signal representing the fluid pressure in a cylinder is less than a determined variation threshold, the data-acquisition, -storage and -processing member (7) is configured to control the display on the display (8) of fixed information concerning the pressure and/or the quantity of fluid in the cylinder (2).

14. Pressurised fluid cylinder **characterised in that** it comprises a valve according to any of claims 1 to 13.

15. Cylinder according to claim 14 **characterised in that**, after a filling of the cylinder and before a first withdrawal, the data-acquisition, -storage and -processing member (7) is configured to control the display on the display (8) of fixed information concerning the fluid content in the cylinder as long as the sensor (9) for detecting the position has not sent a signal representing a flow and/or the pressure of fluid withdrawn from the reservoir (2) for a determined period and/or corresponding to a determined quantity of fluid.
